# EUROPÄISCHE PATENTSCHRIFT

(11) **EP 1 044 409 B1**
(45) Veröffentlichungstag und Bekanntmachung des Hinweises auf die Patenterteilung: **05.06.2002**
(21) Anmeldenummer: 98966917.1
(22) Anmeldetag: 29.12.1998
(51) Int. Cl.: G06F 9/44

(54) **PROGRAMMABLAUFVERFAHREN UND VERFAHREN ZUR ERWEITERUNG EINES PROGRAMMKOMPONENTENSYSTEMS**
PROGRAM FLOW METHOD AND METHOD FOR EXPANDING A PROGRAM COMPONENT SYSTEM
PROCEDE DE DEROULEMENT DE PROGRAMME ET PROCEDE POUR L'EXTENSION D'UN SYSTEME DE COMPOSANTES DE PROGRAMME

(30) Priorität: 02.01.1998 DE 19800102; 20.02.1998 DE 19807191
(43) Veröffentlichungstag der Anmeldung: 18.10.2000
(73) Patentinhaber: Acos International Limited, Dublin 14 (IE)
(72) Erfinder: QUAST, W., Norbert, D-51598 Friesenhagen (DE)
(74) Vertreter: Kern, Ralf M., Dipl.-Ing.
(86) Internationale Anmeldenummer: EP9808507
(87) Internationale Veröffentlichungsnummer: WO9935571

(56) Entgegenhaltungen:
- WO-A-95/29440
- US-A- 5 634 124
- PURTILO J M ET AL: "IMPROVING MODULE REUSE BY INTERFACE ADAPTATION" PROCEEDINGS OF THE INTERNATIONAL CONFERENCE ON COMPUTER LANGUAGES, NEW ORLEANS, MAR. 12 - 15, 1990,12. März 1990, Seiten 208-217, XP000289137 INSTITUTE OF ELECTRICAL AND ELECTRONICS ENGINEERS
- "PROGRAMMING LANGUAGE INDEPENDENT INTERFACE FOR REUSABLE PROGRAMMED COMPONENTS" IBM TECHNICAL DISCLOSURE BULLETIN, Bd. 38, Nr. 7, 1. Juli 1995, Seite 299/300 XP000521698

## Beschreibung

Die Erfindung betrifft den Programmablauf sowie die Erstellung eines Programmkomponentensystems, das auch als "Componentware" bezeichnet wird. Insbesondere betrifft die Erfindung ein Programmablaufverfahren bei einem Programmkomponentensystem sowie ein Verfahren zur Erweiterung eines solchen Systems.

Aus dem US-Patent 5,634,124 (Khoyi et al.) ist ein Verfahren zur Datenintegration durch Objektmanagement bekannt, bei dem eine Vielzahl von Objektverwaltern und ein Verknüpfungsverwalter eingesetzt werden.

In dem Artikel "Componentenware - von der Komponente zur Applikation" von Michael Stal, erschienen in der Zeitschrift OBJEKTspektrum, Heft 3, 1997, Seiten 86 bis 89, sind Grundlagen von Programmkomponentensystemen beschrieben. Die Zielsetzung ist es, die bisher erforderliche, sehr zeitaufwendige Softwareerstellung durch ein bloßes "Verdrahten" vorgegebener Komponenten zu ersetzen. Diese Komponenten sollen in unterschiedlichen Kontexten eingesetzt werden können, ohne daß der Komponentenproduzent Details des einer Komponente zugrundeliegenden Source-Codes bekanntgeben müßte.

Zur Produktion von Componentware sind mehrere sich ergänzende Technologien bekannt, darunter Verteilungsplattformen, Containerplattformen und die Verbunddokumenten-Technologie.

Bei Verteilungsplattformen werden Konventionen und Werkzeuge für die Verteilung von Komponenten über Rechnergrenzen hinweg sowie zur Kommunikation zwischen den Komponenten bereitgestellt. Als Quasi-Industriestandards haben sich folgende Verteilungsplattformen durchgesetzt: DCOM (Distributed Component Object Model) von Microsoft, CORBA (Common Object Request Broker Architecture) von der OMG (Object Management Group), JAVA-RMI (Remote Method Invocation) von JavaSoft.

Containerplattformen beinhalten eine lösungsorientierte Menge von Softwarekomponenten zur zumindest teilweisen Abdeckung eines bestimmten Aufgabenbereichs (zum Beispiel Lagerwesen, Finanzbuchhaltung, ...) und eine lösungsneutrale Middleware (wie zum Beispiel eine graphische Benutzerschnittstelle), um eine Interaktion zwischen den Komponenten und dem Benutzer zu ermöglichen.

Die Verbunddokumenten-Technologie ermöglicht eine Integration unterschiedlicher Applikationen. Ein Verbunddokument umfaßt mehrere Bestandteile (zum Beispiel Tabellen, Grafiken, Texte, ...), für die je eine Applikation verantwortlich ist. Bekannte Architekturen für Verbunddokumente sind beispielsweise ActiveX von Microsoft, OpenDoc von CILab und Java Beans von JavaSoft.

Bei den verfügbaren Verfahren besteht jedoch das Problem, daß die Funktionalität einer Komponente ausschließlich über Schnittstellen genutzt werden kann, die von dem Komponentenproduzenten vordefiniert worden sind. Diese Schnittstellen sind insbesondere die vom Komponentenproduzenten vordefinierten Methoden oder Parameter. Es besteht keine Möglichkeit, die Funktionalität einer Komponente unabhängig vom Komponentenproduzenten zu erweitern, da der Source-Code der Komponente im allgemeinen nicht verfügbar ist. Eine bloße Parametrisierungsmöglichkeit, wie sie gegebenenfalls vorgesehen sein kann, stellt keine Erweiterung der Funktionalität einer Komponente dar, da alle möglichen Funktionen bereits ursprünglich vom Komponentenproduzenten vorgesehen sein müssen.

Die Erfindung hat demgemäß die Aufgabe, bei einem Programmkomponentensystem eine besonders flexible und weitgehende Erweiterbarkeit zu ermöglichen. Insbesondere soll die Funktionalität einer Komponente verändert und/oder erweitert werden können, ohne daß dazu Kenntnisse des Source-Codes der zu erweiternden Komponente erforderlich sind.

Erfindungsgemäß wird diese Aufgabe durch ein Programmablaufverfahren bei einem Programmkomponentensystem mit den Merkmalen des Anspruchs 1 sowie durch ein Verfahren zur Erweiterung des Programmkomponentensystems mit den Merkmalen des Anspruchs 10 gelöst.

Im folgenden wird die zu erweiternde Komponente als "Grundkomponente" und die neu hinzuzufügende Komponente als "Erweiterungskomponente" bezeichnet.

Die Erfindung geht von der Grundüberlegung aus, eine nahezu beliebige Erweiterbarkeit der Grundkomponente dadurch zu erzielen, daß auf das Erfordernis einer vom Programmierer definierten Erweiterungsschnittstelle in der Grundkomponente verzichtet wird. Vielmehr legt der Produzent der Erweiterungskomponente fest, wie die Erweiterungskomponente mit der Grundkomponente zusammenwirken soll. Diese Grundidee stellt eine Umkehrung der bisher in der Informatik üblichen Prinzipien (encapsulation, information hiding, ...) dar. Überraschenderweise lassen sich jedoch gerade durch diese Abkehr von etablierten Grundsätzen relativ große Softwaresysteme in erstaunlich kurzer Zeit auch durch Nicht-Programmierer realisieren.

Die erfindungsgemäße Überlegung, die Erweiterungsschnittstellen nicht durch den Programmierer der Grundkomponente, sondern durch den der Erweiterungskomponente festlegen zu lassen, bedingt eine Umkehr von gewohnten Denkweisen während des Programmablaufs sowie während des Einbindens einer Erweiterungskomponente in ein bestehendes Programmkomponentensystem. Diese beiden Fälle sind Gegenstand der nebengeordneten Ansprüche 1 und 10.

Während des Programmablaufs benötigen Komponenten üblicherweise Daten voneinander, um sie zu verarbeiten und Ergebnisse zu erzeugen. Es ist bekannt, eine aufgerufene Prozedur von der aufrufenden Stelle mit Daten zu versorgen und die Ergebnisse beim Rücksprung zurückzugeben. Dieses Verfahren setzt jedoch voraus, daß die Aufrufschnittstelle vom Programmierer der aufrufenden Prozedur vordefiniert ist.

Erfindungsgemäß ist dagegen vorgesehen, daß sich die aufgerufene Komponente - über ein geeignetes Laufzeitsystem - die benötigten Daten selbst beschafft. Dieser Vorgang wird im folgenden als "Datenbesorgung" bezeichnet. In der Komponente, von der Daten besorgt werden, müssen keine besonderen Schnittstellen vom Programmierer festgelegt worden sein. Entsprechend ist es eine Aufgabe der aufgerufenen Komponente, die Ergebnisse an geeignete Stellen anderer Komponenten einzuspeichern. Dieser Vorgang wird als "Datenentsorgung" bezeichnet. Auch hier ist es nicht erforderlich, daß der Programmierer besondere Schnittstellen für die Datenentsorgung vorgesehen hat. In diesem Zusammenhang soll die bloße Definition oder Deklaration eines Datenfeldes oder einer Variablen (gegebenenfalls einschließlich einer Typangabe und weiterer Parameter) nicht als eine "Schnittstelle" angesehen werden. Eine Schnittstelle wären dagegen zum Beispiel prozedurale Anweisungen, die vom Programmierer explizit in ein Komponentenskript eingefügt werden müssen, um zur Laufzeit einen Datentransfer zu veranlassen oder zu ermöglichen.

Beim Anbinden einer Erweiterungskomponente an ein bestehendes Programmkomponentensystem werden die bekannten Prinzipien in entsprechender Weise umgekehrt. Normalerweise würde man erwarten, daß die bisherigen Komponenten des Programmkomponentensystems durch die Erweiterung unverändert bleiben. Erfindungsgemäß ist dagegen vorgesehen, im Programmkomponentensystem nach Andockpunkten für die Erweiterungskomponente zu suchen, und diejenigen Komponenten des Programmkomponentensystems, in denen mindestens ein Andockpunkt gefunden wurde, zu ändern, indem an jedem gefundenen Andockpunkt eine Aufrufinformation auf die neue Komponente eingetragen wird. Es wird also potentiell jede Komponente des gesamten Programmkomponentensystems verändert.

Durch die erfindungsgemäße Lösung wird es möglich, weitgehende Erweiterungen der Funktionalität eines Programmkomponentensystems durchzuführen, ohne daß solche Möglichkeiten vom Programmierer der bisherigen Komponenten bereits geplant, vorgesehen oder vorgedacht sein müßten. Dies stellt einen wesentlichen Fortschritt gegenüber den bisher bekannten Programmkomponentensystemen dar.

Unter dem Begriff "Laufzeitsystem" werden in der Wortwahl dieser Anmeldung insbesondere alle generischen Routinen verstanden; also solche Routinen, die nicht vom Programmierer einer Komponente explizit vorgegeben werden. Hierbei kann das Laufzeitsystem auch Anteile aufweisen, die in den Komponenten enthalten sind. Beispielsweise kann derjenige Teil des Laufzeitsystems, der den Datentransfer vornimmt, in die einzelnen Komponenten verlagert sein.

Die bei der Datenbe- und -entsorgung übermittelten Daten sind bevorzugt nicht allgemein zugänglich, sondern derjenigen Komponente zugeordnet, von der die Daten besorgt beziehungsweise in die sie entsorgt werden. Diese Daten werden in bevorzugten Ausführungsformen übertragen, während die genannte Komponente inaktiv ist. Insbesondere kann diese Komponente zum Zeitpunkt der Datenbe- und -entsorgung aus dem regulären Arbeitsspeicher ausgelagert sein. Bevorzugt werden bei der Datenbe- und/oder -entsorgung lokale und/oder nichtpersistente Daten übermittelt, also insbesondere keine global verfügbaren Daten.

Bevorzugt erfolgt die Datenbe- und/oder -entsorgung ohne Mitwirkung der Komponente, von der die Daten besorgt beziehungsweise in die sie entsorgt werden. Beispielsweise kann vorgesehen sein, bei einer Datenentsorgung lediglich die entsorgende Komponente sowie das Laufzeitsystem zu beteiligen. Diejenigen Komponente, in die die Daten abgelegt werden, hat in bevorzugten Ausführungsformen keine Einflußmöglichkeit.

Vorzugsweise werden beim Ausführen einer Komponente diejenigen Datenfelder vorgemerkt, für die eine Datenentsorgung erforderlich ist. Dies können insbesondere Datenfelder sein, deren Inhalte durch eine Datenbesorgung ermittelt wurden und auf die ein Schreibzugriff erfolgt ist.

Bevorzugt ist ferner vorgesehen, daß eine aufgerufene Komponente unmittelbar auf in der aufrufenden Komponente definierte und/oder verfügbare Datenfelder lesend und schreibend zuzugreifen vermag. Dies ermöglicht einen quasi schnittstellenfreien Datenaustausch zwischen den beiden genannten Komponenten. Der Aufruf einer Komponente wird vorzugsweise durch eine in einem Andockpunkt der aufrufenden Komponente enthaltene Aufrufinformation oder -nachricht ausgelöst. Die Verwendung von Andockpunkten, die Aufrufinformationen aufnehmen können, ermöglicht eine besonders flexible Funktionalitätserweiterung.

Als potentielle Andockpunkte sind bevorzugt alle Interaktionsschnittstellen einer Komponente vordefiniert. Solche Interaktionsschnittstellen können Interaktions-Bildschirmfelder sein, zum Beispiel Eingabefelder oder Schaltflächen. Ferner können alle Ausgabefelder einer Druckmaske und/oder alle Zugriffsoperationen auf persistente Daten (zum Beispiel Öffnen, Lesen und Schreiben einer Datei oder einer Datenbank) als Interaktionsschnittstellen vorgesehen sein. Interaktionsschnittstellen können in bevorzugten Ausführungsformen auch vom Programmierer einer Komponente vorgegeben sein.

Vorzugsweise werden bei dem Einbinden einer weiteren Komponente in das Programmkomponentensystem alle möglichen Andockpunkte automatisch (und ohne Kenntnis des Source-Codes der bereits vorhandenen Komponenten) identifiziert. Damit ist eine Erweiterung mit geringem Programmieraufwand möglich. Ferner werden bevorzugt geeignete Aufrufinformationen in mindestens einen Andockpunkt eingetragen.

In bevorzugten Ausgestaltungen enthält das Verfahren zur Komponentenerweiterung den weiteren Schritt, mindestens eine Komponente als Binärobjekt zu erzeugen. Insbesondere kann für jeden gefundenen Andockpunkt genau oder höchstens ein Binärobjekt generiert werden. In diesem Binärobjekt kann die Speicherzuteilung des Programmkomponentensystems zur späteren Laufzeit berücksichtigt werden.

Weitere bevorzugte Ausführungsformen sind Gegenstand der Unteransprüche.

Ein Ausführungsbeispiel der Erfindung und mehrere Ausführungsvarianten werden im folgenden anhand der schematischen Zeichnungen genauer erläutert.

Fig. 1 zeigt eine Prinzipdarstellung des Programmkomponentensystems während der Laufzeit,

Fig. 2 zeigt eine Prinzipdarstellung eines Binärobjekts,

Fig. 3 zeigt ein Flußdiagramm der Instantiierung von Komponenten,

Fig. 4a bis Fig. 4c zeigen ein Flußdiagramm des Berechnungsablaufs zur Laufzeit einschließlich eines Komponentenwechsels.

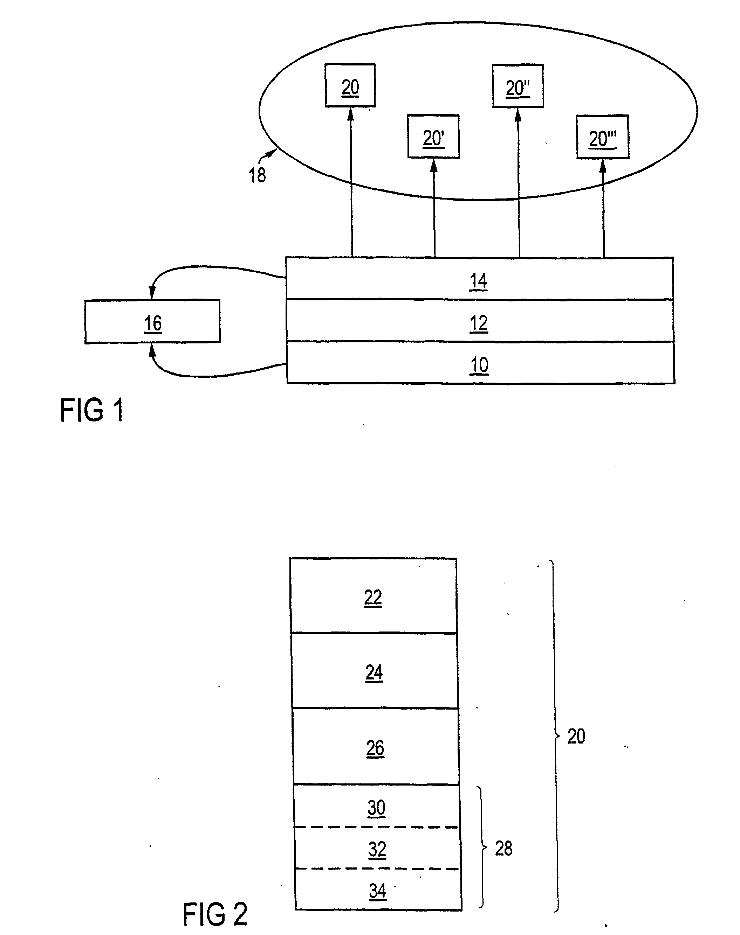

In Fig. 1 ist die Struktur des Programmkomponentensystems während der Laufzeit veranschaulicht. Ein Betriebssystem 10, beispielsweise ein übliches Fensterbetriebssystem, ist um eine Verteilerplattformschicht 12, zum Beispiel DCOM oder CORBA, erweitert. Auf die Verteilerplattformschicht 12 setzt ein Laufzeitsystem 14 auf, das auch als "Middleware" bezeichnet wird. Das Betriebssystem 10 stellt einen Arbeitsspeicherbereich 16 bereit, der von dem Laufzeitsystem 14 verwaltet und genutzt wird. In einer Ausführungsvariante ist die Verteilerplattformschicht 12 weggelassen, und das Laufzeitsystem 14 setzt unmittelbar auf das Betriebssystem 10 auf. Das Programmkomponentensystem wird von einem handelsüblichen Computer, beispielsweise von einem PC-kompatiblen Rechner, ausgeführt.

Neben dem Laufzeitsystem 14 weist das Programmkomponentensystem eine Containerumgebung 18 auf, die mehrere Komponenten 20, 20', 20", 20"' in Form von Binärobjekten enthält. Die Komponenten 20, 20', 20", 20''' bestimmen das Verhalten des Programmkomponentensystems. Sie werden - beispielsweise in Abhängigkeit von Ereignissen, die der Benutzer auslöst - von dem Laufzeitsystem 14 aufgerufen.

Eine Komponente 20 im Binärobjektformat weist, wie in Fig. 2 dargestellt, mehrere Abschnitte auf, und zwar einen Programmabschnitt 22, einen Tabellenabschnitt 24, einen Verzeichnisabschnitt 26 und einen Speicherbildabschnitt 28.

Der Programmabschnitt 22 enthält interpretierbaren Code, der zur Laufzeit von dem Laufzeitsystem 14 interpretiert wird und das Verhalten der Komponente 20 bestimmt. Der im Programmabschnitt 22 enthaltene Code ist in einem Zwischenformat, das eine effiziente Ausführung zur Programmlaufzeit erlaubt. In Ausführungsalternativen ist eine geeignete Kompilierung des Codes zur unmittelbaren Ausführung unter Kontrolle des Betriebssystems 10 vorgesehen.

Im Tabellenabschnitt 24 sind Laufzeittabellen für konfigurierbare Eigenschaften und Parameter des Codes gespeichert. Dies sind beispielsweise Informationen über Fenstergrößen und Farben für die Bildschirmdarstellung oder Informationen für die Druckdarstellung. Außerdem enthalten die Laufzeittabellen Verwaltungsinformationen für die Speicherzuteilung. Der Verzeichnisabschnitt 26 beinhaltet ein Verzeichnis der Andockreferenzen, ein Speicherverzeichnis, ein Datentransferverzeichnis und ein Methodenverzeichnis.

Das Speicherverzeichnis enthält die in der Komponente verfügbaren Bezeichnungen für Speicherfelder, Informationen zu den Speicherfeldern sowie Verweise (genauer gesagt, Offset- oder Displacementwerte) darauf. Das Methodenverzeichnis enthält eine Liste der von der Komponente bereitgestellten Methoden. Diese beiden Verzeichnisse sind im Binärobjekt enthalten, damit auch ohne Kenntnis des Source-Codes einer Komponente (Komponentenskript) eine Erweiterung der Funktionalität einer Komponente möglich ist. Alle im Speicherverzeichnis enthaltenen Speicherfelder sind durch die Operationen der Datenbe- und -entsorgung von beliebigen anderen Komponenten aus zugänglich und können gelesen, verändert und beschrieben werden. Der Programmierer hat im hier beschriebenen Ausführungsbeispiel keine Möglichkeit, einzelne Speicherfelder vor fremdem Zugriff zu schützen. Informationen, die bei der Laufzeit zur Datenbe- und -entsorgung benötigt werden, sind im Datentransferverzeichnis enthalten.

Im Speicherbildabschnitt 28 sind drei zusammenhängende Datenbereiche 30, 32, 34 vorgesehen, deren Grenzen durch die Verwaltungsinformationen in den Laufzeittabellen angegeben werden. Der erste Datenbereich wird im folgenden als Zugriffsdatenbereich 30 bezeichnet. Er ist für diejenigen Daten reserviert, die von einer innerhalb der Aufrufhierarchie übergeordneten Komponente stammen. Diese Daten kann die aufgerufene Komponente unmittelbar lesen, verarbeiten und schreiben, ohne daß ein programmierter Datentransfer notwendig wäre. Übertragen auf eine prozedurale Programmiersprache entspricht dies ungefähr der Möglichkeit, unmittelbar auf Variablen zuzugreifen, die in einer statisch übergeordneten Prozedur definiert sind. Die Größe des Zugriffsdatenbereichs 30 wird bei der Instantiierung einer Komponente 20 festgelegt. Dies ist möglich, weil jede Komponente 20 im Binärobjektformat nur genau einer möglichen Aufrufstelle (einem Andockpunkt) zugeordnet ist. Die Größe des Zugriffsdatenbereichs 30 einer Komponente 20 ist die Summe der Größen des Zugriffsdatenbereichs und des (noch zu beschreibenden) Lokaldatenbereichs der aufrufenden Komponente.

Als zweiter Datenbereich im Speicherbildabschnitt 28 einer Komponente 20 ist der Lokaldatenbereich 32 vorgesehen. Dieser Datenbereich schließt unmittelbar an den Zugriffsdatenbereich 30 an. Er enthält diejenigen Daten, die in der Komponente 20 neu definiert werden. Eine solche Definition kann unmittelbar in der Komponente oder indirekt - zum Beispiel durch eine Referenz auf eine Bildschirmmaske oder ein Druckformat - erfolgen. Übertragen auf eine prozedurale Programmiersprache enthält der Lokaldatenbereich 32 ungefähr die lokalen Variablen einer Prozedur.

Schließlich ist als dritter Datenbereich im Speicherbildabschnitt 28 ein Transferdatenbereich 34 vorgesehen. Der Transferdatenbereich ist zur Zwischenspeicherung von Daten reserviert, die während der Programmlaufzeit von einer anderen Komponente nach dem Datenbesorgungsprinzip besorgt und nach dem Datenentsorgungsprinzip in diese entsorgt werden.

Wenn eine Komponente 20 instantiiert, also aus einem Komponentenskript in mindestens ein Binärobjekt übersetzt wird, brauchen der Zugriffsdatenbereich 30 und der Transferdatenbereich 34 nicht mit definierten Werten belegt zu werden, weil diese Bereiche zur Laufzeit sowieso überschrieben werden. Der Lokaldatenbereich 32 wird mit vorgegebenen Standardwerten für die einzelnen Datentypen gefüllt. Während der Laufzeit eines Programmkomponentensystems dienen die drei Datenbereiche 30, 32 und 34 einer Komponente 20 zur Zwischenspeicherung des jeweils aktuellen Systemzustandes bei jedem Aufruf einer weiteren Komponente und zum teilweisen Wiederherstellen dieses Zustandes (hinsichtlich des Lokaldatenbereichs 32 und des Transferdatenbereichs 34) bei einem Rücksprung.

Zur Erzeugung einer Komponente erstellt der Programmierer ein Komponentenskript, das zur automatischen Übersetzung mittels eines Generatorsystems geeignet ist. Dieser auch als Instantiierung einer Komponente bezeichnete Übersetzungsvorgang wird unten genauer beschrieben. Das Komponentenskript stellt die Definition der zu generierenden Komponente dar. Es enthält Anweisungszeilen, die als interpretierbarer Code der Komponente übersetzt werden. Die verwendete Programmiersprache ist an sich bekannt und beruht auf objektorientierten Prinzipien. Außerdem kann das Komponentenskript Anweisungszeilen enthalten, die vom Programmierer vorgedachte Andockpunkte für Erweiterungen bestimmen. Optional können auch Daten und Parameter in einem Komponentenskript enthalten sein, zum Beispiel Parameter für die visuelle Darstellung von Daten oder eine Aufzählung zulässiger Eingabewerte. Weiter können im Komponentenskript Anweisungen zum Aufruf von "Fremdprogrammen" enthalten sein. Während der Laufzeit wird dann das entsprechende Programm, beispielsweise ein COBOL-Programm, gestartet. Dieses Programm kann nun seinerseits Schnittstellen des Programmkomponentensystems nutzen und beispielsweise weitere Komponenten starten.

Ferner kann das Komponentenskript Referenzen auf zu verwendende Bildschirmmasken und -formate sowie auf Druckformate enthalten. Solche Bildschirmmasken oder Druckformate werden vorab mittels eines geeigneten graphischen Werkzeugs entwickelt. Das Werkzeug ("GUI-Builder") erzeugt mehrere globale Verzeichnisse, auf die während jedes Instantiierungsvorgangs einer Komponente zugegriffen wird. Dies sind erstens ein globales Verzeichnis der verfügbaren Bildschirmmasken und Druckformate, zweitens ein Verzeichnis der durch diese Masken und Formate vorgegebenen Andockpunkte und drittens ein Verzeichnis der Bezeichner und Typen der in den definierten Eingabefeldern beziehungsweise Druckfeldern erwarteten Daten.

Falls es sich bei dem Komponentenskript um die Definition einer Erweiterungskomponente handelt, also einer Komponente, die eine bereits bestehende Komponente (Grundkomponente) erweitern soll, enthält das Komponentenskript ferner einen Vererbungsparameter, der die gewünschten Andockpunkte für die Komponentenerweiterung spezifiziert. Der Vererbungsparameter kann, wie noch erläutert wird, mehr als eine Grundkomponente und mehr als einen Andockpunkt definieren.

Als Andockpunkte dienen generische oder vom Programmierer angegebene Stellen der Grundkomponente, an denen eine Aufrufinformation für eine Erweiterungskomponente eingefügt werden kann. Die Andockpunkte einer Komponente im Binärobjektformat können automatisch identifiziert werden, so daß eine Komponentenerweiterung ohne Kenntnis des Source-Codes der Grundkomponente möglich ist.

Im hier beschriebenen Ausführungsbeispiel sind vier Arten von Andockpunkten vorgesehen. Erstens sind als Andockpunkte alle Eingabefelder und sonstige Bedienelemente (Knöpfe, Schaltflächen, ...) in den Bildschirmmasken vorgesehen, auf die die Grundkomponente zugreift. Damit ist es zum Beispiel möglich, Komponentenerweiterungen immer dann aufzurufen, wenn der Benutzer eine Interaktion mit einem Eingabefeld der Grundkomponente durchführt, beispielsweise einen Wert eingibt oder das Eingabefeld aktiviert oder mit dem Mauszeiger überfährt. Der Programmierer der Grundkomponente braucht diese Möglichkeit nicht explizit vorzusehen. Ebenso dienen alle Druckmasken-Ausgabefelder als Andockpunkte, so daß beispielsweise durch eine Komponentenerweiterung die Ausgabewerte einer auszudruckenden Tabelle verändert werden können.

Als Andockpunkte sind ferner alle Operationen der Grundkomponente auf persistente Daten (beispielsweise Datei- oder Datenbankzugriffe) vorgesehen. Auch hier können Erweiterungskomponenten "zwischengeschaltet" werden, ohne daß dies der Programmierer der Grundkomponente ausdrücklich angeben müßte. Schließlich kann, wie bereits erwähnt, eine Komponente auch vom Programmierer bestimmte Andockpunkte an beliebigen Stellen des Programmablaufs enthalten. In Ausführungsalternativen sind weitere oder andere Andockpunkte möglich.

Jeder Andockpunkt weist in dem hier beschriebenen Ausführungsbeispiel mehrere Andockstellen ("slots") auf. Dadurch können mehrere Komponentenerweiterungen an einen einzigen Andockpunkt angeschlossen werden. Bei einem Andockpunkt, der einem Eingabefeld zugeordnet ist, sind beispielsweise eine Haupt-Andockstelle und fünf Neben-Andockstellen vorgesehen. Eine eventuell in der Haupt-Andockstelle eingetragene Komponentenerweiterung wird immer dann aufgerufen, wenn der Benutzer das Eingabefeld aktiviert. Wahlweise kann diese Komponente auch bei jedem Anzeigen des Eingabefeldes, also schon vor einer Benutzeraktion, aufgerufen werden. Die Neben-Andockstellen können dagegen zum Beispiel dem Betätigen bestimmter Funktionstasten oder anderen Aktionen des Benutzers zugeordnet werden. Bei Druckmasken-Ausgabefeldern kann die Ansteuerung der Andockstellen eines Andockpunktes zum Beispiel durch eine Bedienereingabe zum Startzeitpunkt des Druckvorgangs bestimmt werden. In Ausführungsalternativen sind andere Aufrufstrategien oder andere Anzahlen von Andöckstellen (beispielsweise nur eine pro Andockpunkt) möglich.

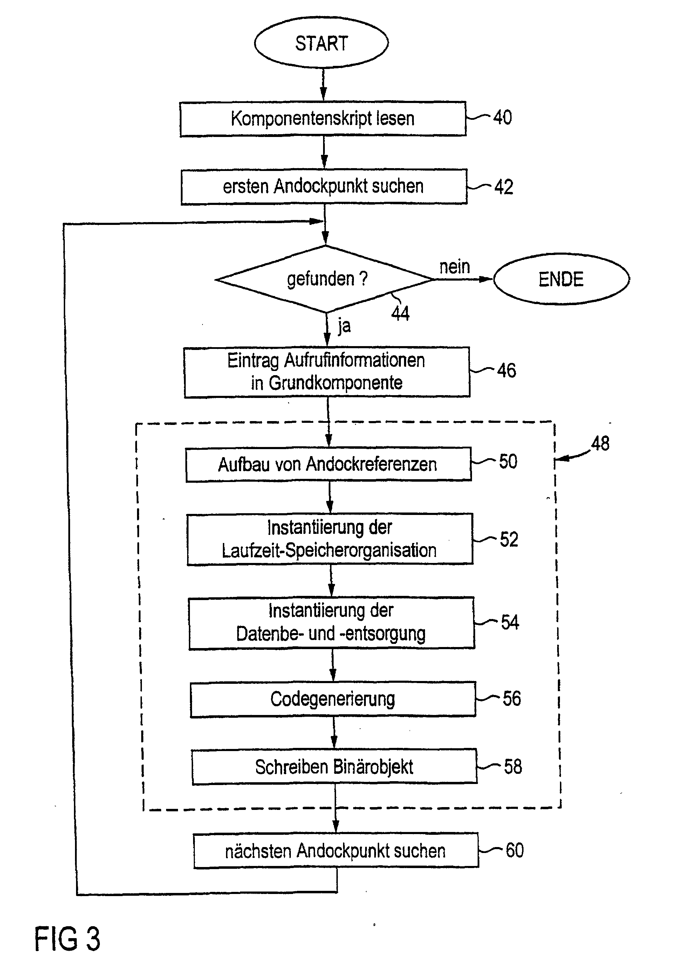

Im folgenden wird die Instantiierung von Komponenten unter Hinweis auf Fig. 3 genauer beschrieben. Wie bereits erwähnt, bedeutet Instantiierung die Übersetzung eines Komponentenskripts in mindestens ein Binärobjekt. Im hier beschriebenen Ausführungsbeispiel wird bei der Instantiierung für jeden gefundenen Andockpunkt genau eine Komponente als Binärobjekt erzeugt.

Der Instantiierungsvorgang, der automatisch von dem Generatorsystem durchgeführt wird, beginnt mit dem Einlesen des Komponentenskripts (Schritt 40). In Schritt 42 wird nun ein erster Andockpunkt gesucht. Wenn das zu übersetzende Komponentenskript nur die Containeridentifizierung als Vererbungsparameter enthält, wird ein generischer Andockpunkt in der Containerumgebung 18 (Fig. 1) angenommen. Dies ermöglicht eine Instantiierung von "Wurzelkomponenten", also Komponenten, die keine Komponentenerweiterungen darstellen.

Enthält dagegen das zu übersetzende Komponentenskript einen "echten" Vererbungsparameter, so definiert dieser die für die Komponentenerweiterung vorgesehenen Andockpunkte. Hierfür bestehen mehrere Möglichkeiten. Wenn zum Beispiel ein Eingabefeld einer Bildschirmmaske als Andockpunkt dienen soll, so kann der Vererbungsparameter sowohl den Feldnamen und die gewünschte Andockstelle innerhalb des Andockpunktes (Nummer des "slots") angeben als auch die Grundkomponente spezifizieren. Alternativ ist es auch möglich, im Vererbungsparameter nur den Feldnamen und gegebenenfalls die Nummer des "slots" einzutragen. Als Andockpunkte dienen dann alle Stellen in den gegenwärtig im Programmkomponentensystem vorhandenen Binärobjekten, an denen ein Bildschirmformat referenziert wird, das das genannte Feld als Eingabefeld verwendet.

Wenn ein erster Andockpunkt gefunden wurde (Abfrage 44), so wird zunächst eine geeignete Aufrufinformation, beispielsweise eine zum Aufruf der Erweiterungskomponente dienende Nachricht ("message"), in die den Andockpunkt enthaltende Grundkomponente eingetragen (Schritt 46). Die Grundkomponente wird dazu im Binärobjektformat gelesen, der Verweis auf die Erweiterungskomponente wird in die Grundkomponente eingetragen, und das so veränderte Binärobjekt wird in das Programmkomponentensystem zurückgeschrieben. Der Vererbungsparameter legt dabei fest, an welcher Andockstelle ("slot") innerhalb eines Andockpunktes die Aufrufinformation eingetragen werden soll und welche Benutzeraktion zu einem Aufruf der Erweiterungskomponente führen soll.

Nach der Modififkation der den gefundenen Andockpunkt enthaltenden Grundkomponente, wird die diesem Andockpunkt zugeordnete Erweiterungskomponente als Binärobjekt aufgebaut (Kasten 48). Zunächst werden die Andockpunkte der Erweiterungskomponente bestimmt und in das entsprechende Verzeichnis im Verzeichnisabschnitt 26 der Komponente 20 eingetragen (Schritt 50). Dazu werden alle Bildschirmmasken und Druckformate untersucht, auf die das Skript der Erweiterungskomponente verweist. Ferner erfolgt ein Zugriff auf das globale Verzeichnis der durch diese Masken und Formate definierten Andockpunkte. Die dort enthaltenen Informationen werden als Andockreferenzen in den Verzeichnisabschnitt 26 übernommen. Neben dem Namen eines eingebundenen Bildschirm- oder Druckfeldes sind dies beispielsweise Informationen über den Feldtyp, den Speicherplatzbedarf des zugeordneten Datenwertes und so weiter.

Ferner wird das Komponentenskript nach Andockreferenzen durchsucht, die vom Programmierer angegeben wurden (Konstrukt INTERFACE-IS <Name>). Auch diese Andockreferenzen werden in den Verzeichnisabschnitt 26 übernommen. Schließlich werden auch für alle im Komponentenskript gefundenen Zugriffsoperationen auf persistente Daten (Konstrukt zum Beispiel READ <Entitätsname>) entsprechende Andockreferenzen in den Verzeichnisabschnitt 26 aufgenommen.

In einem nächsten Schritt 52 wird die Laufzeit-Speicherorganisation instantiiert. Hierzu werden zunächst diejenigen Feldbezeichnungen in den von der Erweiterungskomponente referenzierten Bildschirmmasken und Druckformaten bestimmt, die nicht bereits in der Grundkomponente definiert sind. Diese Feldbezeichnungen werden - sofern sie nicht mit Einträgen im Zugriffsdatenbereich 30 übereinstimmen - als lokale Variablen der Erweiterungskomponente angesehen. Alle Feldbezeichnungen werden in das Speicherverzeichnis im Verzeichnisabschnitt 26 eingetragen. Ferner wird eine Transferliste angelegt, um während der Laufzeit die Bildschirm- und Druckdaten aus einem Pufferspeicher in den Speicherbereich der Erweiterungskomponente (Zugriffsdatenbereich 30 oder Lokaldatenbereich 32 oder Transferdatenbereich 34) zu übertragen. Diese Funktion wird zur Laufzeit automatisch ausgeführt, ohne daß eine explizite Programmierung erforderlich wäre.

Als weiterer Teil des Schritts 52 werden nun die statischen Speicherdefinitionen im Komponentenskript verarbeitet. Da die Grundkomponente eindeutig feststeht, können schon zur Instantiierungszeit die Größen der drei Datenbereiche 30, 32, 34 des Binärobjekts 20 ermittelt werden. Ferner kann das Speicherverzeichnis im Verzeichnisabschnitt 26 vollständig erstellt werden.

Zunächst werden alle diejenigen statischen Speicherdefinitionen (Konstrukt INHERIT-DATA <Name>) im Komponentenskript gesucht, die bereits in der Grundkomponente definiert sind. Die entsprechenden Datenwerte finden sich zur Laufzeit im Zugriffsdatenbereich 30 an der gleichen Stelle (dem gleichen Versatz- oder Displacementwert) wie bei der Grundkomponente, da der Arbeitsspeicherbereich 16, der vom Zugriffsdatenbereich 30 der Grundkomponente belegt wird, beim Aufruf der Erweiterungskomponente weiterverwendet wird. In das Speicherverzeichnis der Erweiterungskomponente werden daher Einträge aufgenommen, die denen der Grundkomponente entsprechen. Diese Einträge enthalten den Namen und Typ des Datenwertes sowie die Feldlänge und den Displacementwert.

Schließlich werden solche statische Speicherdefinitionen des Komponentenskripts verarbeitet, die dem Lokaldatenbereich 32 zugeordnet sind. Dies sind erstens Definitionen von Speicherfeldern, die in der Grundkomponente nicht definiert sind, und zweitens Speicherdefinitionen, bei denen ausdrücklich eine lokale Speicherung angegeben wurde (Konstrukt INHERIT-DATA-LOCAL <Name>). Für derartige Speicherdefinitionen wird eine freie Adresse im Lokalspeicherbereich 32 ermittelt und reserviert. Genauer gesagt, wird die nächste freie Adresse hinsichtlich des aktuellen Speicherpegels (der von der Speicherbelegung der Grundkomponente und eventuell schon zugewiesenen lokalen Feldern der Erweiterungskomponente abhängt) verwendet. Auch für diese Speicherdefinitionen werden entsprechende Einträge in das Speicherverzeichnis der Erweiterungskomponente aufgenommen.

Als nächster Schritt 54 wird die zur Laufzeit stattfindende Datenbe- und -entsorgung der Erweiterungskomponente instantiiert, indem das Datentransferverzeichnis im Verzeichnisabschnitt 26 angelegt wird. Hierzu werden zunächst die Datenbe- und -entsorgungsdefinitionen im Komponentenskript gesucht. Diese Definitionen haben die folgende Form, wobei INH für "inherit" und "IME" für "Import/Export" steht:

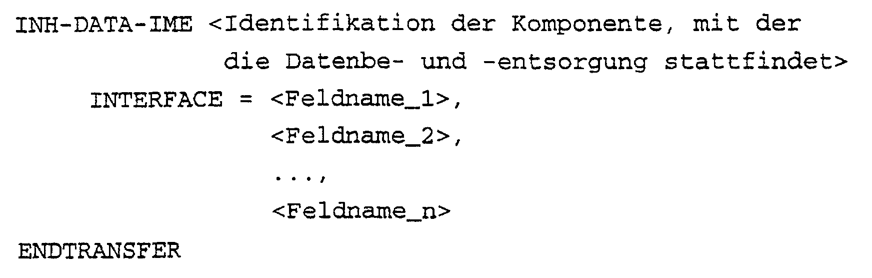

Beim Auffinden einer derartigen Definition wird das Speicherverzeichnis der adressierten Komponente ausgewertet. Informationen über die auszutauschenden Datenfelder (Feldtyp, Feldlänge, Adresse oder Displacement) im Arbeitsspeicherbereich 16 zur Laufzeit werden eingelesen. Ferner wird ein entsprechendes Speicherfeld im Transferdatenbereich 34 reserviert, sofern das adressierte Feld nicht im Zugriffsdatenbereich 30 enthalten ist. Aus diesen Informationen wird ein entsprechender Eintrag im Datentransferverzeichnis des Verzeichnisabschnitts 26 der Erweiterungskomponente erzeugt. Dieser Eintrag enthält somit die Zuordnung des Speicherfeldes der adressierten Komponente zu dem Speicherfeld im Transferdatenbereich 34 der gegenwärtig instantiierten Komponente. Die adressierte Komponente braucht nicht die Grundkomponente zu sein, und das adressierte Speicherfeld in dieser Komponente kann in einem der drei Bereiche 30, 32 und 34 liegen. Demgemäß ist eine Datenbe- und -entsorgung von allen Daten möglich, die in einer beliebigen anderen Komponente verfügbar sind.

Nun erfolgt die Codegenerierung (Schritt 56), in der die Anweisungszeilen im Komponentenskript in einen geeigneten, von dem Laufzeitsystem 14 interpretierbaren Zwischencode umgesetzt werden. Die Codegenerierung wird nach an sich bekannten Grundsätzen ausgeführt. Die Komponente wird nun im Binärobjektformat aus den Bestandteilen zusammengebunden, die bei den bisher beschriebenen Schritten erzeugt worden sind. Das resultierende Binärobjekt hat die in Fig. 2 gezeigte und oben bereits beschriebene Struktur. Es wird in einem weiteren Schritt gespeichert (Schritt 58).

Damit ist die Erzeugung eines Binärobjekts für einen Andockpunkt abgeschlossen. Im Instantiierungsverfahren wird nun ein nächster Andockpunkt gesucht (Schritt 60). Falls ein solcher im Programmkomponentensystem vorhanden ist, wird ein weiteres Binärobjekt erzeugt; andernfalls ist die Instantiierung beendet. Die aus einem Komponentenskript erzeugten Binärobjekte unterscheiden sich höchstens hinsichtlich der in dem Speicherverzeichnis definierten Speicherbelegung. Wenn in einer Grundkomponente mehrere Andockpunkte gefunden werden, ist diese Speicherbelegung jedoch im Regelfall identisch. Dieser Fall kann auch eintreten, wenn mehrere Andockpunkte in verschiedenen Grundkomponenten gefunden werden. In einer Ausführungsalternative ist daher zur Optimierung vorgesehen, identische Binärobjekte nur je einmal zu erzeugen.

Zum Ausführen des Progrämmkomponentensystems wird die in Fig. 1 dargestellte Struktur aufgebaut. Dazu werden zunächst das Laufzeitsystem 14 und die Containerumgebung 18 geladen und gestartet. Die Containerumgebung 18 enthält einen Katalog der beim Starten sichtbaren Menüeinträge. Dieser Katalog wird durch die Komponenten 18 definiert. Nun wird eine Wurzelkomponente gestartet, die bei dem oben beschriebenen Instantiierungsvorgang von dem Generatorsystem eigenständig erzeugt wurde. Das Laufzeitsystem wartet nun auf ein vom Benutzer ausgelöstes Ereignis, beispielsweise eine Menüauswahl, durch das der Aufruf einer "eigentlichen" Komponente des Programmkomponentensystems angezeigt wird.

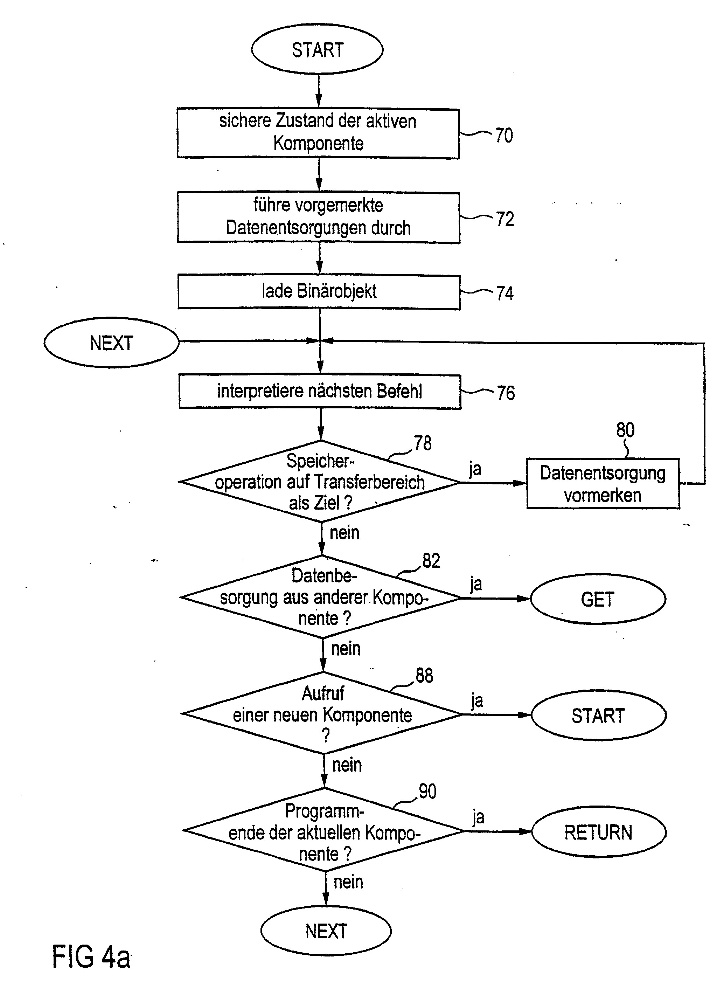

In Fig. 4a bis Fig. 4c ist das Programmablaufverfahren gezeigt, das beim Komponentenaufruf sowie beim Ausführen der aufgerufenen Komponente durchgeführt wird. Zur Laufzeit ist in dem hier betrachteten Ausführungsbeispiel stets genau eine Komponente aktiv. Unmittelbar nach dem Systemstart ist dies die oben beschriebene Wurzelkomponente. Nur die jeweils aktive Komponente befindet sich im Arbeitsspeicherbereich 16. Die Komponente hat hierbei die in Fig. 2 gezeigte Binärobjektstruktur. In Ausführungsalternativen ist auch ein quasi-paralleler Ablauf mehrerer Komponenten (z.B. über "multi-threading") möglich. Die Steuerung erfolgt dann durch das zugrundeliegende Betriebssystem 10.

Wenn eine neue Komponente aufgerufen werden soll, zum Beispiel in Reaktion auf eine Eingabe oder Aktion des Benutzers, wird zunächst der Zustand der gerade aktiven Komponente gesichert (Schritt 70). Dies bedeutet zumindest, daß derjenige Teil des Arbeitsspeicherbereichs 16 in eine Datei oder einen sonstigen Sicherungsbereich übertragen wird, in dem sich der Speicherbildabschnitt 28 der Komponente befindet. Im hier beschriebenen Ausführungsbeispiel wird sogar das gesamte Binärobjekt gesichert, weil dessen übrige Abschnitte hinsichtlich des Speicherbedarfs nicht ins Gewicht fallen.

Ferner werden alle Datenentsorgungsvorgänge durchgeführt, die während des Ablaufs der bisher aktiven Komponente vorgemerkt worden sind (Schritt 72). Zur Effizienzsteigerung ist in dem hier beschriebenen Ausführungsbeispiel nämlich vorgesehen, nur diejenigen Speicherfelder des Transferdatenbereichs 34, auf die ein schreibender Zugriff stattgefunden hat, wieder von der aktuellen Komponente in die durch die Datenentsorgung referenzierte Komponente zu übertragen. In Ausführungsalternativen erfolgt keine Vormerkung der veränderten Daten, sondern es werden bei jedem Komponentenwechsel alle Datenfelder im Transferdatenbereich 34 an die jeweils referenzierten Komponenten übertragen.

Bei jedem Datenentsorgungsvorgang wird das Datentransferverzeichnis der aktuellen Komponente herangezogen, um die referenzierte(n) Komponente(n) und das entsprechende Datenfeld (die entsprechenden Datenfelder) in deren Speicherbildabschnitt(en) 28 zu bestimmen und die Daten dorthin zu übertragen. Durch jede Datenentsorgung wird somit ein Binärobjekt einer gegenwärtig nicht aktiven Komponente verändert. Während der Laufzeit kann eine Komponente mehrmals aufgerufen und teilweise ausgeführt worden sein. In diesem Fall sind mehrere Versionen der Komponente gesichert. Die Datenentsorgung findet in diesem Fall in diejenige gesicherte Komponentenversion statt, die innerhalb der zur gegenwärtig aktiven Komponente führenden Aufrufkette dieser Komponente am nächsten steht. In Ausführungsalternativen wird eine andere oder vom Programmierer bestimmte Auswahl der zu verwendenden Komponentenversion getroffen.

Als nächster Schritt 74 wird nun die neu aufgerufene Komponente als Binärobjekt in den Arbeitsspeicherbereich 16 geladen. Dabei wird auf jeden Fall der Teil des Arbeitsspeicherbereichs 16, der für die Programm-, Tabellen- und Verzeichnisabschnitte 22, 24, 26 der alten Komponente benutzt wurde, überschrieben.

Auch der Lokaldatenbereich 32 des Speicherbildabschnitts 28 der neuen Komponente wird in den Arbeitsspeicherbereich 16 geladen. Damit sind beim Start der neuen Komponente alle lokalen Daten mit definierten Standardwerten vorbesetzt. Derjenige Abschnitt des Arbeitsspeicherbereichs 16, der dem Zugriffsdatenbereich 30 der aufgerufenen Komponente entspricht, wird jedoch nicht überschrieben. Damit gehen die dort gespeicherten Datenwerte beim Komponentenwechsel nicht verloren. Die neue Komponente kann vielmehr über den Zugriffsdatenbereich 30 unmittelbar auf Speicherfelder zugreifen, die in der aufrufenden Komponente definiert sind. Die Größe das Zugriffsdatenbereichs 30 bestimmt sich nach der in der Instantiierungsphase ermittelten Speicherverteilung. Falls die aufrufende Komponente auf völlig andere Werte zugreift wie die aufgerufene Komponente, hat der Zugriffsdatenbereich 30 die Größe Null.

Nachdem die aufgerufene Komponente als Binärobjekt geladen wurde, wird der im Programmabschnitt 22 enthaltene Code Befehl für Befehl interpretiert. Bei der Ausführung eines Befehls (Schritt 76) sind einige Sonderfälle zu beachten.

Falls es sich bei dem Befehl um eine Speicheroperation handelt, deren Ziel der Transferdatenbereich 34 ist (Abfrage 78), dann wird das betroffene Speicherfeld für eine spätere Datenentsorgung vorgemerkt (Schritt 80). Ein solches Vormerken ist auch durch einen ausdrücklichen Befehl möglich.

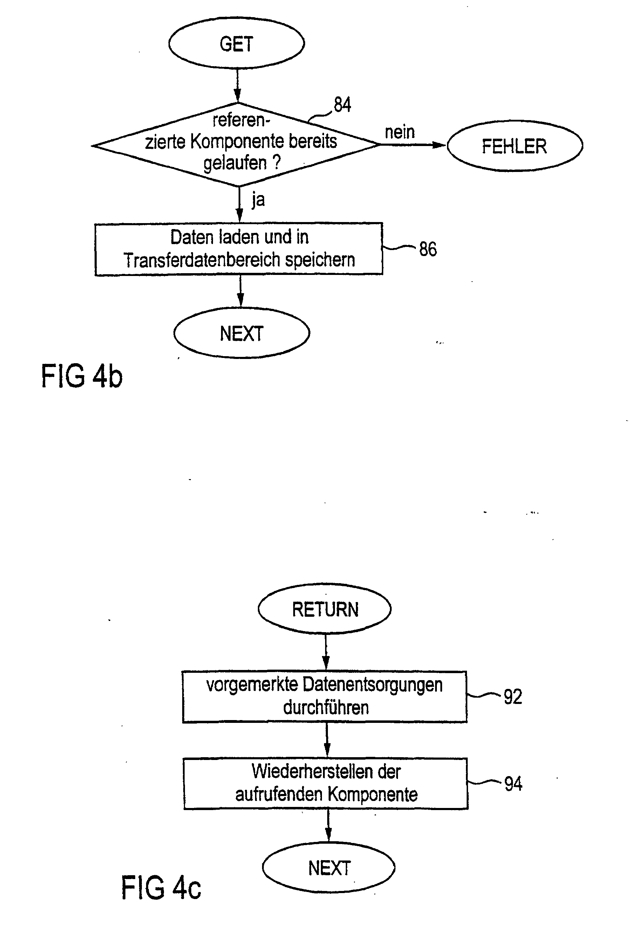

Handelt es sich bei dem aktuellen Befehl um eine Anweisung, die eine Datenbesorgung aus einer referenzierten Komponente veranlaßt (Abfrage 82), so werden die in Fig. 4b gezeigten Schritte ausgeführt. Ein derartiger Befehl ist zum Beispiel das oben bereits beschriebene Konstrukt INH-DATA-IME, das im hier beschriebenen Ausführungsbeispiel sowohl als Deklaration einer Datenbe- und -entsorgungsbeziehung als auch als Anweisung zur Datenbesorgung aufgefaßt wird. In Ausführungsalternativen werden schon beim Start einer Komponente alle von dieser referenzierten Daten besorgt.

Bei dem Datenbesorgungsverfahren nach Fig. 4b wird zunächst geprüft, ob die referenzierte Komponente bereits (zumindest teilweise) ausgeführt wurde (Abfrage 84). Ist dies nicht der Fall, so können keine gültigen Daten besorgt werden, und ein Laufzeitfehler wird ausgelöst. Falls dagegen eine gesicherte Version der referenzierten Komponente vorhanden ist, werden die benötigten Daten daraus geladen und in den Transferdatenbereich 34 der gegenwärtig aktiven Komponente geschrieben. Die jeweiligen Speicherplätze in der referenzierten und der aktiven Komponente sind aus dem Datentransferverzeichnis der aktiven Komponente ersichtlich. Auch hier kann es (ähnlich wie in Schritt 72) vorkommen, daß mehrere Versionen der referenzierten Komponente gespeichert sind. Es wird dann diejenige Version zur Datenbesorgung herangezogen, die in der zur aktiven Komponente führenden Aufrufkette zuletzt ausgeführt wurde. In Ausführungsalternativen sind andere vorgegebene oder programmierbare Auswahlstrategien möglich. Nach dem Ende der Datenbesorgung wird der Programmablauf bei Schritt 76 (Fig. 4a) fortgesetzt.

In Abfrage 88 (Fig. 4a) wird überprüft, ob es sich bei dem aktuell interpretierten Befehl um einen Befehl zum Komponentenwechsel, also zum Aufruf einer neuen Komponente, handelt. Ein solcher Befehl kann insbesondere eine in einem Andockpunkt gespeicherte Aufrufinformation (message) sein. Wie bereits beschrieben, führt eine solche Aufrufinformation je nach der Art des Andockpunktes entweder durch ihr bloßes Vorhandensein oder bei einer vorbestimmten Aktion des Benutzers zum Aufruf der in der Aufrufinformation angegebenen Komponente. Wenn ein solcher Aufruf stattfindet, wird der aktuelle Befehlszählerstand in einem Stapelspeicher gesichert und eine neue Instanz des in Fig. 4a dargestellten Verfahrens wird begonnen.

Abfrage 90 betrifft schließlich den Fall, daß die Ausführung der aktuellen Komponente regulär beendet wird. Ist dies nicht der Fall, so wird die Programmausführung mit Schritt 76 fortgesetzt. Falls dagegen das Programmende erreicht ist, wird das in Fig. 4c dargestellte Verfahren ausgeführt. Es werden zunächst, ähnlich wie in Schritt 72, alle vorgemerkten Datenentsorgungen ausgeführt (Schritt 92). Daraufhin wird der Zustand derjenigen Komponente im Arbeitsspeicherbereich 16 wiederhergestellt, die die aktuelle Komponente aufgerufen hat (Schritt 94). Dies betrifft die Abschnitte 22, 24 und 26 sowie den Lokaldatenbereich 32. Der Abschnitt des Arbeitsspeicherbereichs 16, der dem Zugriffsdatenbereich 30 der aufrufenden Komponente entspricht, wird dagegen nicht wiederhergestellt, so daß eine Rückgabe von Werten im Zugriffsdatenbereich 30 von der aktuellen Komponente zur aufrufenden Komponente möglich ist.

Nach dem Wiederherstellen der aufrufenden Komponente ist die gegenwärtige Instanz des in Fig. 4a bis Fig. 4c gezeigten Verfahrens beendet. Die Programmausführung wird in der früheren Instanz an der Stelle fortgesetzt, an der der ursprüngliche Komponentenaufruf ausgelöst wurde (Schritt 76).

Durch die hier geschilderten Verfahren ist eine Funktionalitätserweiterung von Komponenten auf relativ einfache Weise möglich. Beispielsweise sei eine Grundkomponente gegeben, die ein Preisfindungsverfahren realisiert, das auf einem vom Benutzer (über ein Bingabefeld) einzugebenden Einzelpreis basiert. Mittels einer geeigneten Erweiterungskomponente kann diese Grundkomponente um ein anwendungsbezogenes Preisfindungsverfahren für den Einzelpreis erweitert werden. Die Aufrufinformation für die Erweiterungskomponente wird dazu in einen Andockpunkt geschrieben, der dem Eingabefeld für den Einzelpreis zugeordnet ist. Der von der Erweiterungskomponente ermittelte Einzelpreis wird durch das Datenentsorgungsverfahren in die Grundkomponente eingeschrieben. Weitere Datenwerte, die die Erweiterungskomponente zur Preisfindung benötigt, werden durch das Datenbesorgungsverfahren aus anderen Komponenten abgerufen. Es ist nicht erforderlich, daß bei der Programmierung der Grundkomponente oder der anderen Komponenten die Möglichkeit einer solchen Funktionalitätserweiterung berücksichtigt wurde.

Die Programmierung von größeren Softwaresystemen läßt sich auf unterschiedliche Weise vereinfachen. Zum Beispiel ist es möglich, sogenannte "Adapterkomponenten" zu definieren. Eine Adapterkomponente ist eine Erweiterungskomponente, die unmittelbar eine andere Komponente referenziert. Dadurch kann die andere Komponente mehrfach unter verschiedenen Namen verwendet werden.

## Patentansprüche

1. Programmablaufverfahren bei einem Prögrammkomponentensystem, das ein Laufzeitsystem (14) und mehrere Komponenten (20, 20', ...) mit je einem Programmabschnitt (22) aufweist, mit den folgenden Schritten beim Ausführen des Programmabschnitts (22) einer ersten Komponente (20):
a) durch das Laufzeitsystem (14) vermittelte Datenbesorgung von Daten einer zweiten Komponente (20') in die erste Komponente (20) unabhängig von programmiererdefinierten Schnittstellen in der zweiten Komponente (20'), und
b) durch das Laufzeitsystem (14) vermittelte Datenentsorgung von Daten der ersten Komponente (20) in die zweite Komponente (20') unabhängig von programmiererdefinierten Schnittstellen in der zweiten Komponente (20').

2. Verfahren nach Anspruch 1,
**dadurch gekennzeichnet, daß** die bei der Datenbesorgung übermittelten Daten von einem Speicherbildabschnitt (28) der zweiten Komponente (20') in einen Transferdatenbereich (34) der ersten Komponente (20) übertragen werden, und/oder daß die bei der Datenentsorgung übermittelten Daten von einem Transferdatenbereich (34) der ersten Komponente (20) in einen Speicherbildabschnitt (28) der zweiten Komponente (20') übertragen werden.

3. Verfahren nach Anspruch 1 oder Anspruch 2,
**dadurch gekennzeichnet, daß** die Datenbe- und/oder -entsorgung ohne Mitwirkung der zweiten Komponente (20') erfolgt.

4. Verfahren nach einem der Ansprüche 1 bis 3,
**dadurch gekennzeichnet, daß** die zweite Komponente (20') bei der Datenbe- und/oder -entsorgung inaktiv ist.

5. Verfahren nach einem der Ansprüche 1 bis 4,
**dadurch gekennzeichnet, daß** sich der Transferdatenbereich (34) der zweiten Komponente (20') bei der Datenbe- und/oder -entsorgung in einem Sicherungsbereich befindet.

6. Verfahren nach einem der Ansprüche 1 bis 5,
**dadurch gekennzeichnet, daß** bei der Datenbe- und/oder -entsorgung lokale und/oder nicht-persistente Daten der zweiten Komponente (20') übermittelt werden.

7. Verfahren nach einem der Ansprüche 1 bis 6,
**dadurch gekennzeichnet, daß** beim Ausführen des Programmabschnitts (22) der ersten Komponente (20) vorgemerkt wird, für welche Daten der ersten Komponente (20) eine Datenentsorgung erforderlich ist.

8. Verfahren nach einem der Ansprüche 1 bis 7,
**dadurch gekennzeichnet, daß** eine aufgerufene Komponente (20, 20', ...) unmittelbar auf einen Zugriffsdatenbereich (30) zuzugreifen vermag, der die in der aufrufenden Komponente (20, 20', ...) definierten und/oder verfügbaren Datenfelder enthält.

9. Verfahren nach einem der Ansprüche 1 bis 8,
**dadurch gekennzeichnet, daß** der Aufruf einer Komponente (20, 20', ...) durch eine Aufrufinformation ausgelöst wird, die in einem Andockpunkt der aufrufenden Komponente enthalten ist.

10. Verfahren zur Erweiterung eines mehrere Komponenten (20, 20', ...) aufweisenden Programmkomponentensystems um eine weitere Komponente, mit den Schritten:
a) Suchen von Andockpunkten für die weitere Komponente, die einem durch eine Definition der weiteren Komponente bestimmten Vererbungsparameter entsprechen, in dem Programmkomponentensystem, und
b) Ändern derjenigen Komponenten (20, 20', ...) des Programmkomponentensystems, in denen mindestens ein Andockpunkt gefunden wurde, indem an jedem gefundenen Andockpunkt eine Aufrufinformation auf die weitere Komponente eingetragen wird.

11. Verfahren nach Anspruch 10,
**dadurch gekennzeichnet, daß** alle Interaktionsschnittstellen der bisherigen Komponenten (20, 20', ...) als potentielle Andockpunkte vordefiniert sind.

12. Verfahren nach Anspruch 10,
**dadurch gekennzeichnet, daß** alle von den bisherigen Komponenten (20, 20', ...) referenzierten Interaktions-Bildschirmfelder und/oder alle Druckmasken-Ausgabefelder und/oder alle Zugriffsoperationen auf persistente Daten als potentielle Andockpunkte vordefiniert sind.

13. Verfahren nach einem der Ansprüche 10 bis 12,
**dadurch gekennzeichnet, daß** durch das Eintragen der Aufrufinformation in einen Andockpunkt ein Aufruf der weiteren Komponente aus der Komponente, in die die Aufrufinformation eingetragen wurde, vorbereitet wird.

14. Verfahren nach einem der Ansprüche 10 bis 13, **gekennzeichnet durch** den weiteren Schritt:
c) Erzeugen mindestens eines Binärobjekts aus der Definition der weiteren Komponente.

15. Verfahren nach Anspruch 14,
**dadurch gekennzeichnet, daß** für jeden gefundenen Andockpunkt höchstens ein Binärobjekt erzeugt wird.

16. Verfahren nach Anspruch 15,
**dadurch gekennzeichnet, daß** bei der Erzeugung jedes Binärobjekts die Speicherzuteilung in derjenigen Komponente (20, 20', ...) des Programmkomponentensystems berücksichtigt wird, die den zugrundeliegenden Andockpunkt enthält.

## Claims

1. Program flow method in a program component system, which comprises a running time system (14) and a number of components (20, 20'...) with one program section (22) each, comprising the following steps when carrying out the program section (22) of a first component (20):
a) data acquisition provided by the running time system of data of a second component (20') into the first component (20) independent of programming-defined interfaces in the second component (20') and
b) data disposal provided by the running time system (14) of data of the first component (20) into the second component (20') independent of programming-defined interfaces in the second component (20').

2. A method as claimed in claim 1, **characterized in that** the data transferred during the data collection is transferred from a memory image section (28) of the second component (20') into a transfer data portion (34) of the first component (20), and/or that the data transmitted during the data disposal is transferred from a transfer data portion (34) of the first component (20) into a memory image section (28) of the second component (20').

3. A method as claimed in claim 1 or 3, **characterized in that** the data acquisition and/or disposal is carried out without the assistance of the second component (20').

4. A method as claimed in one of claims 1 to 3, **characterized in that** the second component (20') is inactive during the data acquisition and/or disposal.

5. A method as claimed in one of claims 1 to 4, **characterized in that** the transfer data portion (34) of the second component (20') is located in a backup portion during the data acquisition and/or disposal.

6. A method as claimed in one of claims 1 to 5, **characterized in that** during the data acquisition and/or disposal, local and/or non-persistent data of the second component (20') is transferred.

7. A method as claimed in one of claims 1 to 6, **characterized in that** when carrying out the program section (22) of the first component (20) it is noted for which data of the first component (20) a data disposal is required.

8. A method as claimed in one of claims 1 to 7, **characterized in that** a calling component (20, 20',...) may directly access an access data portion (30) which contains the data fields defined and/or available in the called component (20, 20', ...).

9. A method as claimed in one of claims 1 to 8, **characterized in that** the call of a component (20, 20', ...) is activated by a call information which is contained in a docking point of the calling component.

10. A method for expanding a program component system containing a plurality of components (20, 20'...) by a further component, comprising the steps:
a) searching for docking points for the further component, which correspond to an inheritance parameter defined by a definition of the further components, in the program component system, and
b) changing those components (20, 20',...) of the program component system, in which at least one docking point was found in that at each docking point found a call information is registered on the further component.

11. A method as claimed in claim 10, **characterized in that** all interaction interfaces of the former components (20, 20', ...) are predefined as potential docking points.

12. A method as claimed in claim 10, **characterized in that** all interaction screen fields and/or all print mask output fields and/or all access operations on persistent data referenced by the former components (20, 20',...) are pre-defined as potential docking points.

13. A method as claimed in one of the preceding claims 10 to 12, **characterized in that** a call of the further components from the component that was registered into the call information is prepared by the registration of the call information into a docking point.

14. A method as claimed in one of claims 10 to 13, **characterized by** the further step:
c) generating at least one binary object from the definition of the further component.

15. A method as claimed in claim 14, **characterized in that** at least one binary object is generated for each docking point found.

16. A method as claimed in claim 15, **characterized in that** when generating each binary object the memory allocation is considered **in that** component (20, 20',...) of the program component system which contains the underlying docking point.

## Revendications

1. Procédé pour le déroulement d'un programme dans un système à composantes programmables, comprenant un système à version exécutable (14) et plusieurs composantes (20, 20', ...) comprenant chacune un tronçon de programme (22) avec les étapes suivantes lors de l'exécution du tronçon de programme (22) d'une première composante (20):
a) approvisionnement de données, par l'entremise du système de version exécutable (14) depuis une deuxième composante (20') dans la première composante (20) indépendamment d'interfaces définies par programme dans la deuxième composante (20'), et
b) élimination de données, par l'entremise du système de version exécutable (14) depuis la première composante (20) dans la deuxième composante (20') indépendamment d'interfaces définies par programme dans la deuxième composante (20').

2. Procédé selon la revendication 1, **caractérisé en ce que** les données transmises lors de l'approvisionnement de données sont transmises depuis un secteur image de mémoire (28) de la deuxième composante (20') dans une zone de données de transfert (34) de la première composante (20), et/ou **en ce que** les données transmises lors de l'élimination de données sont transmises depuis une zone de données de transfert (34) de la première composante (20) dans un secteur image de mémoire (28) de la deuxième composante (20').

3. Procédé selon l'une ou l'autre des revendications 1 et 2, **caractérisé en ce que** l'approvisionnement et/ou l'élimination des données a lieu sans coopération de la deuxième composante (20').

4. Procédé selon l'une des revendications 1 à 3, **caractérisé en ce que** la deuxième composante (20') est inactive lors de l'approvisionnement et/ou de l'élimination des données.

5. Procédé selon l'une des revendications 1 à 4, **caractérisé en ce que** la zone de données de transfert (34) de la deuxième composante (20') lors de l'approvisionnement et/ou de l'élimination des données se trouve dans une zone de sécurité.

6. Procédé selon l'une des revendications 1 à 5, **caractérisé en ce que** lors de l'approvisionnement et/ou de l'élimination des données, des données locales et/ou non-persistantes de la deuxième composante (20') sont transmises.

7. Procédé selon l'une des revendications 1 à 6, **caractérisé en ce que** lors de l'exécution du tronçon de programme (22) de la première composante (20), on effectue un marquage afin de savoir pour quelles données de la première composantes (20) une élimination des données est nécessaire.

8. Procédé selon l'une des revendications 1 à 7, **caractérisé en ce qu'**une composante appelée (20, 20', ...) est susceptible d'accéder directement à une zone de données d'accès (30) qui contient les champs de données définis dans la composante appelante (20, 20', ...) et/ou les champs de données disponibles.

9. Procédé selon l'une des revendications 1 à 8, **caractérisé en ce que** l'appel d'une composante (20, 20', ...) est déclenché par une information d'appel qui est contenue dans un point d'accostage de la composante appelante.

10. Procédé pour l'extension d'un système de composantes programmables comprenant plusieurs composantes (20, 20', ...) à raison d'une autre composante, comprenant les étapes suivantes :
a) recherche de points d'accostage pour l'autre composante, qui correspondent à des paramètres d'héritage déterminés par une définition de l'autre composante, dans le système de composantes programmables, et
b) modification de celle des composantes (20, 20', ...) du système de composantes programmables dans lesquelles a été trouvé au moins un point d'accostage, et en enregistrant au niveau de chaque point d'accostage trouvé une information d'appel vers l'autre composante.

11. Procédé selon la revendication 10, **caractérisé en ce que** toutes les interfaces d'interaction des composantes actuelles (20, 20', ...) sont prédéfinies comme points d'accostage potentiels.

12. Procédé selon la revendication 10, **caractérisé** en ce tous les champs d'écran d'interaction référencés par les composantes actuelles (20, 20', ...) et/ou tous les champs de sortie de masques d'impression et/ou toutes les opérations d'accès à des données persistantes sont prédéfinis comme points d'accostage potentiels.

13. Procédé selon l'une des revendications 10 à 12, **caractérisé en ce que** par enregistrement de l'information d'appel dans un point d'accostage on prépare un appel de l'autre composante depuis la composante dans laquelle a été enregistrée l'information d'appel.

14. Procédé selon l'une des revendications 10 à 13, **caractérisé par** l'étape suivante :
c) génération d'au moins un objet binaire à partir de la définition de l'autre composante.

15. Procédé selon la revendication 14, **caractérisé en ce que** l'on génère tout au plus un objet binaire pour chaque point d'accostage trouvé.

16. Procédé selon la revendication 15, **caractérisé en ce que** lors de la génération de chaque objet binaire, on tient compte de l'affectation mémoire dans celle des composantes (20, 20', ...) du système de composantes programmables qui contient le point d'accostage de référence.
